# EUROPÄISCHE PATENTSCHRIFT

(11) **EP 0 991 545 B1**
(45) Veröffentlichungstag und Bekanntmachung des Hinweises auf die Patenterteilung: **09.05.2001**
(21) Anmeldenummer: 98934883.4
(22) Anmeldetag: 19.06.1998
(51) Int. Cl.: B60N 2/48

(54) **Kupplungseinrichtung für ein teleskopartig verstellbares Gebilde wie eine Kopftstütze o.dgl.**
Coupling device for a telescopically adjustable object such as a headrest
Système d'accouplement pour un élément téléscopique tel qu'un appui-tête ou similaire

(30) Priorität: 26.06.1997 DE 19727168
(43) Veröffentlichungstag der Anmeldung: 12.04.2000
(73) Patentinhaber: GRAMMER AG, 92224 Amberg (DE)
(72) Erfinder: WEILAND, Holger, D-92245 Kümmersbruck (DE)
(74) Vertreter: LOUIS, PÖHLAU, LOHRENTZ & SEGETH
(86) Internationale Anmeldenummer: DE9801728
(87) Internationale Veröffentlichungsnummer: WO9900269

(56) Entgegenhaltungen:
- EP-A- 0 743 224
- DE-A- 3 039 934
- DE-A- 4 219 941
- DE-U- 29 711 138
- US-A- 5 110 185

## Beschreibung

Die Erfindung betrifft eine Kupplungseinrichtung für ein teleskopartig verstellbares Gebilde wie eine Kopfstütze o.dgl., das einen ersten und einen zweiten Körper aufweist, wobei die Kupplungseinrichtung derart vorgesehen ist, daß der erste Körper des Gebildes gemeinsam mit dem zweiten Körper des Gebildes entlang einer ersten Linearführung zwischen einer Grundstellung und einer ersten Verlängerungsstellung und ab der ersten Verlängerungsstellung nurmehr der zweite Körper relativ zum ersten Körper linear bis zu einer Maximalstellung verstellbar ist.

Kopfstützen bspw. von Fahrzeugsitzen sind üblicherweise mit Hilfe eines Verbindungselementes mit der Rückenlehne des Fahrzeugsitzes verbunden und in der Höhe verstellbar. Derartige bekannte Kopfstützen sind normalerweise in einem Höhenbereich von größenordnungsmäßig 60 bis 100 mm in der Höhe wunschgemäß einstellbar. Das ist insbes. für sehr große Sitzbenutzer oftmals nicht ausreichend.

Aus der DE 42 19 941 A1 ist eine Rückenlehne eines Kraftwagensitzes mit einer Kopfstütze und einem dieser nachgeschalteten Rückenteil bekannt, wobei die Kopfstütze und das Rückenteil von einer die Bauhöhe reduzierenden unteren Ablagestellung in eine ihre Rückhaltefunktion erfüllende obere Gebrauchsstellung überführbar sind. Die Kopfstütze und/oder das wenigstens eine Rückenteil weisen mindestens durch einen Bezug abgedeckte Mittel auf, deren wirksame, die Höhe der Kopfstütze und des Rückenteils bestimmende Erstreckung unter Stauchen der Kopfstütze und/oder des Rückenteiles und damit Verringerung ihrer Höhe reduzierbar ist.

Die gattungsbildende EP 0 743 224 A1 beschreibt eine mit einer Kopfstütze kombinierte Rückenlehne eines Fahrzeugsitzes. Die Kopfstütze ist mit der Rückenlehne mittels einer Verbindungseinrichtung höhenverstellbar verbunden. Die Verbindungseinrichtung weist einen der Rückenlehne zugewandten proximalen Abschnitt und einen davon entfernten, der Kopfstütze zugewandten distalen Abschnitt auf. Der proximale und der distale Abschnitt sind jeweils mit Rastkerben für ein zugehöriges Rastelement ausgebildet. Das eine Rastelement ist an einer in der Rückenlehne angebrachten Führungsbuchse vorgesehen. Das andere Rastelement ist in einer in der Kopfstütze angebrachten Führungsbuchse vorgesehen. Der gesamte Verstellweg der Kopfstütze zwischen einer abgesenkten tiefsten und einer maximal aus der Rückenlehne herausstehenden höchsten Stellung ist von der Längenabmessung der Verbindungseinrichtung abhängig und durch diese entsprechend begrenzt.

Die DE 30 39 934 A1 offenbart eine Kopfstütze für den Sitz eines Kraftfahrzeuges, die seitlich angeordnete Polsterteile in Form sogenannter Ohrenbacken aufweist. Bei dieser bekannten Kopfstütze sind die Polsterteile aus einer Ruhestellung, in der sie mit der Frontseite der Kopfstütze weitgehend bündig sind, um eine horizontale Achse nach vorne in eine Gebrauchsstellung schwenkbar ausgebildet.

Jedes Polsterteil kann mehrteilig ausgebildet und in der Gebrauchsstellung nach vorne ausziehbar sein. Mit dieser Kopfstütze wird ein störendes Hineinragen in den Sitzbereich bei Nichtgebrauch vermieden, wobei dennoch ein seitlicher Kopf schutz gewährleistet wird.

Aus der US-A 5 110 185 ist ein Fahrzeugsitz für ein Kraftfahrezug, insbesondere für ein Cabriolet mit einer Überschlag-Schutzeinrichtung bekannt. Die bspw. in eine Kopfstütze der Rückenlehne des Fahrzeugsitzes integrierte Überschlag-Schutzeinrichtung ist mit einer Antriebseinrichtung verbunden, die mittels einer Aktivierungseinrichtung bei einem Überschlag plötzlich aktivierbar ist, um die Überschlag-Schutzeinrichtung in eine schützende Stellung auszufahren.

Der Erfindung liegt die Aufgabe zugrunde, eine Kupplungseinrichtung der eingangs genannten Art zu schaffen, die bei einer relativ einfachen Ausbildung eine teleskopartige Verstellung des Gebildes in einem großen Verstellbereich ermöglicht.

Diese Aufgabe wird bei einer Kupplungseinrichtung der eingangs genannten Art erfindungsgemäß dadurch gelöst, daß die erste Linearführung mindestens eine ortsfeste erste Stange aufweist, die an ihrem distalen Endabschnitt mit einer die erste Verlängerungsstellung definierenden Aussparung ausgebildet ist, daß der erste Körper einen die Kupplungseinrichtung bildenden federbelasteten Schieber aufweist, der in der ersten Verlängerungsstellung in die in der ersten Stange ausgebildete Aussparung einrastet, daß der erste Körper mindestens einen Kanal zur linearen Führung einer zugehörigen zweiten Stange des zweiten Körpers aufweist, und daß die zweite Stange an ihrem distalen Endabschnitt mit einer Ausnehmung für den Schieber ausgebildet ist, wobei der Schieber bei der Verkürzung des Gebildes von der Maximalstellung zurück zur ersten Verlängerungsstellung derart verstellt wird, daß er aus der Aussparung in der ersten Stange freigegeben und gleichzeitig in die Ausnehmung in der zweiten Stange einrastet und den zweiten Körper mit dem ersten Körper verbindet.

Die Kupplungseinrichtung ist derartig ausgebildet, daß die Verstellung des zweiten Körpers in bezug auf den ersten Körper ab der ersten Verlängerungsstellung automatisch, d.h. ohne die Betätigung eines besonderen Betätigungselementes, ermöglicht wird, um den zweiten Körper wunschgemäß bis zu einer Maximalstellung zu verstellen. Gleichzeitig wird der erste Körper automatisch in der ersten Verlängerungsstellung zurückgehalten.

Der Schieber ist zweckmäßigerweise quer zur ersten und zweiten Stange angeordnet und im ersten Körper quer zur ersten und zur zweiten Stange verstellbeweglich vorgesehen, um entweder in die Aussparung am distalen Endabschnitt der ersten Stange oder in die Aussparung am distalen Endabschnitt der zweiten Stange einzurasten.

Die zweite Stange kann an ihrem distalen Ende mit einer Schrägfläche ausgebildet sein und der Schieber kann mit einem Anlageabschnitt ausgebildet sein, der bei der Verkürzung des Gebildes von der Maximalstellung zurück zur ersten Verlängerungsstellung an der Schrägfläche verstellt wird. Durch diese Verbindung ist dann ab der ersten Verlängerungsstellung zurück bis zur Grundstellung also der zweite Körper mit dem ersten Körper gemeinsam in die Grundstellung zurückverstellbar.

Die erfindungsgemäße Kupplungseinrichtung ist einfach ausgebildet und weist nur wenige Einzelteile auf, was unter Montagegesichtspunkten vorteilhaft ist.

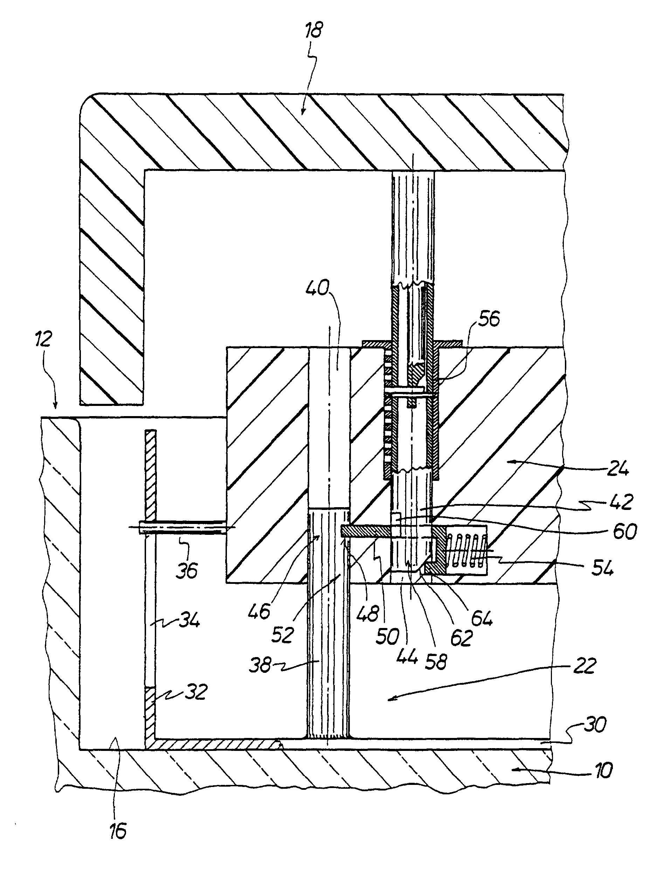

Weitere Einzelheiten, Merkmale und Vorteile ergeben sich aus der nachfolgenden Beschreibung eines in der Zeichnung schematisch in einer Schnittdarstellung verdeutlichten Ausführungsbeispieles der erfindungsgemäßen Kupplungseinrichtung für ein teleskopartig verstellbares Gebilde in Gestalt einer Kopfstütze.

Die Figur zeigt abschnittweise geschnitten eine Rückenlehne 10 eines Fahrzeugsitzes 12. Die Rückenlehne 10 ist mit einer Aussparung 16 ausgebildet, die zur Aufnahme einer Kopfstütze 18 vorgesehen ist, wobei die Kopfstütze 18 mit einem Zwischenkörper 24 kombiniert ist. Der Zwischenkörper 24 bildet hierbei einen ersten Körper und die Kopfstütze 18 einen zweiten Körper.

In der Aussparung 16 ist eine sitz- bzw. rückenlehnenfeste Basiseinrichtung 22 angebracht, die ein Bodenelement 30 und vom Bodenelement 30 seitlich wegstehende Seitenelemente 32 aufweist. In der Figur ist nur eines dieser beiden Seitenelemente 32 dargestellt. Jedes der beiden Seitenelemente 32 ist mit einem Führungsschlitz 34 ausgebildet. Vom Zwischenkörper 24 stehen seitlich gegenüberliegend stabförmige Führungselemente 36 weg, die in den entsprechenden Führungsschlitzen 34 geführt sind.

Vom Bodenelement 30 der sitzfesten Basiseinrichtung 22 stehen außerdem zwei erste Stangen 38 zueinander parallel orientiert nach oben, von welchen in der Figur ebenfalls nur eine der beiden Stangen 38 dargestellt ist. Der Zwischenkörper 24 ist mit zwei ersten Kanälen 40 ausgebildet, in welche sich die ersten Stangen 38 spielfrei hineinerstrecken. Durch die ersten Stangen 38 und die ersten Kanäle 40 ist eine erste Linearführung bestimmt, entlang welcher der den ersten Körper bildende Zwischenkörper 24 gemeinsam mit der den zweiten Körper bildenden Kopfstütze 18 von der in die Ausnehmung 16 versenkten Grundstellung in eine erste erhöhte Verlängerungsstellung verstellbar ist.

Die den zweiten Körper bildende Kopfstütze 18 weist zwei zueinander parallel orientierte zweite Stangen 42 auf, die von der Kopfstütze 18 nach unten ragen und die sich in zugehörige zweite Kanäle 44 im Zwischenkörper 24 hineinerstrecken. Die zweiten Kanäle 44 sind im Zwischenkörper 24 von den ersten Kanälen 40 beabstandet seitlich neben diesen ausgebildet. Durch Verschieben der zweiten Stangen 42 in den zugehörigen zweiten Kanälen 44 im Zwischenkörper 24 ist es also möglich, die Kopfstütze 18 in bezug auf den Zwischenkörper 24 zwischen der ersten Verlängerungsstellung und einer Maximalstellung wunschgemäß zu verstellen.

Jede der beiden von der Basiseinrichtung 22 nach oben stehende erste Stange 38 ist an ihrem oberseitigen, d.h. distalen Endabschnitt 48 mit einer Aussparung 48 ausgebildet. Die entsprechende Aussparung 48 dient zur Aufnahme eines federbelasteten Schiebers 50 einer Kupplungseinrichtung 52. Der Schieber 50 ist im Zwischenkörper 24 zur ersten Stange 38 und zur zweiten Stange 42 quer orientiert vorgesehen und linear beweglich angeordnet. Der Schieber 50 wird mittels eines Federelementes 54, das in einer Ausnehmung im Zwischenkörper 24 angeordnet ist, gegen die erste Stange 38 gezwängt.

Im jeweiligen zweiten Kanal 44 des Zwischenkörpers 24 ist oberseitig eine Hülse 56 festgelegt, die eine schrittweise Verstellung der Kopfstütze 18 in bezug auf den Zwischenkörper 24 von der ersten Verlängerungsstellung bis zur Maximalstellung ermöglicht.

Die zweite Stange 42 ist an ihrem unterseitigen, d.h. an ihrem distalen Endabschnitt 58 mit einer Ausnehmung 60 ausgebildet, die in axialer Richtung eine größere lichte Höhe aufweist als der Dicke des Schiebers 50 entspricht. Die Ausnehmung 60 dient zur Aufnahme des Schiebers 50 der Kupplungseinrichtung 52, wenn die Kopfstütze 18 von einer über der ersten Verlängerungsstellung befindlichen Verlängerungsposition gegen den in der ersten Verlängerungsstellung festgelegten Zwischenkörper 24 bewegt wird. Dabei kommt in der auf den Zwischenkörper 24 abgesenkten ersten Verlängerungsstellung der Kopfstütze 18 die am distalen Endabschnitt 58 der zweiten Stange 42 ausgebildete Schrägfläche 62 an einem Anlageabschnitt 64 des Schiebers 50 zur Anlage, so daß der Schieber 50 aus der Ausnehmung 48 im distalen Endabschnitt 46 der ersten Stange 38 herausbewegt wird und in die Ausnehmung 60 am distalen Endabschnitt 58 der zweiten Stange 42 einrastet. Das bedeutet, daß in dieser ersten Verlängerungsstellung die Kopfstütze 18 dann gemeinsam mit dem Zwischenkörper 24 wieder in die Aussparung 16 in der Rückenlehne 10 des Fahrzeugsitzes 12 hineinbewegt werden kann.

## Patentansprüche

1. Kupplungseinrichtung für ein teleskopartig verstellbares Gebilde, wie eine Kopfstütze o.dgl., das einen ersten Körper (24) und einen zweiten Körper (18) aufweist, wobei die Kupplungseinrichtung (52) derart vorgesehen ist, daß der erste Körper (24) des Gebildes gemeinsam mit dem zweiten Körper (18) des Gebildes entlang einer ersten Linearführung (38, 40) zwischen einer Grundstellung und einer ersten Verlängerungsstellung und ab der ersten Verlängerungsstellung nurmehr der zweite Körper (18) relativ zum ersten Körper (24) linear bis zu einer Maximalstellung verstellbar ist,
**dadurch gekennzeichnet,**
daß die erste Linearführung (38, 40) mindestens eine ortsfeste erste Stange (38) aufweist, die an ihrem distalen Endabschnitt (46) mit einer die erste Verlängerungsstellung definierenden Aussparung (48) ausgebildet ist, daß der erste Körper (24) einen die Kupplungseinrichtung (52) bildenden federbelasteten Schieber (50) aufweist, der in der ersten Verlängerungsstellung in die in der ersten Stange (38) ausgebildete Aussparung (48) einrastet, daß der erste Körper (24) mindestens einen Kanal (44) zur linearen Führung einer zugehörigen zweiten Stange (42) des zweiten Körpers (18) aufweist, und daß die zweite Stange (42) an ihrem distalen Endabschnitt (58) mit einer Ausnehmung (60) für den Schieber (50) ausgebildet ist, wobei der Schieber (50) bei der Verkürzung des Gebildes von der Maximalstellung zurück zur ersten Verlängerungsstellung derart verstellt wird, daß er aus der Aussparung (48) in der ersten Stange (38) freigegeben wird und gleichzeitig in die Ausnehmung (60) in der zweiten Stange (42) einrastet und den zweiten Körper (18) mit dem ersten Körper (24) verbindet.

2. Kupplungseinrichtung nach Anspruch 1,
**dadurch gekennzeichnet,**
daß die zweite Stange (42) an ihrem distalen Ende mit einer Schrägfläche (62) ausgebildet ist, und daß der Schieber (50) mit einem Anlageabschnitt (64) ausgebildet ist, der bei der Verkürzung des Gebildes von der Maximalstellung zurück zur ersten Verlängerungsstellung an der Schrägfläche (62) verstellt wird.

## Claims

1. Coupling device for a telescopically adjustable article, such as a head-rest or the like, which has a first body (24) and a second body (18), the coupling device (52) being provided in such a way that the first body (24) of the article together with the second body (18) of the article is adjustable along a first linear guide (38, 40) between a basic position and a first extension position, and, starting from the first extension position, only the second body (18) is adjustable relative to the first body (24) in a linear manner up to a maximum position, characterized in that the first linear guide (38, 40) has at least one fixed first rod (38), which, at its distal end section (46), is formed with a recess (48) defining the first extension position, in that the first body (24) has a spring-loaded slide (50), which forms the coupling device (52) and latches in place in the first extension position in the recess (48) formed in the first rod (38), in that the first body (24) has at least one passage (44) for the linear guidance of an associated second rod (42) of the second body (18), and in that the second rod (42), at its distal end section (58), is formed with a recess (60) for the slide (50), the slide (50), when the article is being shortened from the maximum position back to the first extension position, being adjusted in such a way that it is released from the recess (48) in the first rod (38) and at the same time latches in place in the recess (60) in the second rod (42) and connects the second body (18) to the first body (24).

2. Coupling device according to Claim 1, characterized in that the second rod (42) is formed with an inclined surface (62) at its distal end, and in that the slide (50) is formed with a bearing section (64) which is adjusted on the inclined surface (62) when the article is being shortened from the maximum position back to the first extension position.

## Revendications

1. Dispositif d'accouplement pour un élément réglable téléscopiquement tel qu'un appuie-tête ou analogue qui se compose d'un premier corps (24) et d'un second corps (18), du type dans lequel le dispositif d'accouplement (52) est prévu de manière telle que le premier corps (24) de l'élément est réglable en même temps que le deuxième corps (18) de l'élément le long d'un premier guidage linéaire (38, 40) entre une position de base et une première position de déploiement et, à partir de la première position de déploiement, le second corps (18) seul est réglable linéairement jusqu'à une position maximale, **caractérisé en ce que** le premier guidage linéaire (38, 40) se compose d'au moins une première tige immobile (38), présentant à sa section terminale distale (46) un évidement (48) qui définit la première position de déploiement, en ce que le second corps (24) présente un coulisseau (50) soumis à un ressort et constituant le dispositif d'accouplement (52) qui, dans la première position de déploiement, pénètre dans l'évidement (48) formé dans la première tige (38), en ce que le premier corps présente au moins un canal (44) pour le guidage linéaire d'une seconde tige correspondante (42) du second corps (18) et en ce que la seconde tige (42) présente dans sa section terminale distale un évidement (60) pour le coulisseau (50), grâce à quoi le coulisseau (50), lors du raccourcissement de l'élément depuis sa position maximale jusqu'à sa première position de déploiement, est réglé de manière telle qu'il est libéré de l'évidement (48) dans la première tige (38) et que, simultanément, il est inséré dans l'évidement (50) de la seconde tige (42), de sorte que le second corps (18) est réuni au premier corps (24).

2. Dispositif d'accouplement selon la revendication 1, caractérisé en ce que la seconde tige (42) comporte à son extrémité distale une surface oblique (62), et en ce que le coulisseau (50) présente une section de butée (64) qui, lors du raccourcissement de l'élément depuis sa position maximale jusqu'à la première position de déploiement, vient buter contre la surface oblique (62).
